# EUROPEAN PATENT APPLICATION

(11) **EP 4 220 485 A1**
(43) Date of publication of application: **02.08.2023**
(21) Application number: 22154508.0
(22) Date of filing: 01.02.2022
(51) Int. Cl.: G06N 3/02, G06N 20/00, G05B 13/04, G05B 19/02, G06N 3/10, G05B 19/418

(54) **SYSTEM, APPARATUS AND METHOD FOR CALIBRATING SIMULATION MODEL OF ONE OR MORE ASSETS**

(71) Applicant: Siemens Aktiengesellschaft, 80333 München (DE)
(72) Inventor: HEINZERLING, Till, 76185 Karlsruhe (DE); METTENLEITER, Manuel, 91056 Erlangen (DE); MITTAL, Akash, 560047 Bengaluru, Karnataka (IN); RAMANATH, Vinay, 560070 Bengaluru, Karnataka (IN); VENUGOPAL, Aswin, 560100 Bengaluru, Karnataka (IN)
(74) Representative: Isarpatent

(57) **Abstract**

Disclosed is system (100), apparatus (110) and method (400) for calibration of a simulation model (125) of assets (105) in an industrial plant. The method comprising receiving requirements to predict parameter values using simulation model (125), generating first trained machine learning model from simulation model based on the requirements, calibrating the first trained machine learning model using the parameters (502, 504) as an input to the first trained machine learning model, determining first set of posterior distribution of the parameters of the industrial plant based on calibrated first trained machine learning model, sampling first set of posterior distribution of the parameters, generating second trained machine model based on sampled posterior distribution of parameters, calibrating second trained machine learning model using first set of posterior distribution as input to second trained machine learning model, and determining second set of posterior distribution of the parameters of industrial plant based on calibrated second trained machine learning model.

## Description

The present invention relates to a field of simulation systems and more particularly relates to calibrating simulation model of one or more assets in an industrial plant.

In an industrial environment, digital twin of plurality of assets of the industrial plant is generated to predict behaviour of the assets. The digital twin of the industrial plant may provide insights into several domains such as parameter prediction, remaining useful life prediction, failure or breakdown prediction and so forth. An essential step in the development of the digital twin is the generation of a simulation model and subsequent calibration of the simulation model. For example, in a process plant, the calibration of the simulation model of the process plant is an essential step to realize the development of the digital twin of the process plant. In particular, it is required to continuously synchronize the simulation model with respect to the process plant observations in real-time.

However, one of the major challenges in calibration of the simulation models of complex industrial systems, is that existing simulation models are inefficient and require a great amount of time to reach steady state of the simulation model and further determination of calibration parameters of the simulation model. For example, a heat exchange recovery network in a power plant is a complex part and simulation models for such parts in the plant are large. Due to high number of unit operations and recycles in the complete process, the number of parameters to be calibrated with respect to such systems can be large. With the existing simulation models and methodologies for calibration, it may take several hours to calibrate the simulation model and generate the digital twin in due time.

In the existing approach, the calibration of simulation models is done when the simulation model reaches a steady state. A major challenge with this approach is that it takes a huge amount of time to reach the steady state. Another major challenge is that in case there is a change in operating state of change in parameter combination, then the process needs to be repeated until the simulation model reaches the steady state for the changes. This process becomes time-consuming and cumbersome. Furthermore, another limitation to existing models is that as the number of parameters increases, the time required for calibration also increases.

Moreover, the current systems and methods require domain expertise and to achieve an effective result, there is a requirement to run a number of simulations. As the simulations are done on the actual simulator, this increases overall parameter calibration time making the whole process inefficient. In addition, the existing systems and methods generally yield point estimates that are very sensitive to the perturbations in the system.

In light of the above, there exists a need for calibrating simulation models of one or more assets in an industrial plant in a time-efficient manner.

Therefore, it is an object of the present invention to provide a system, apparatus and method for calibrating the simulation models of one or more assets in an industrial plant.

The object of the present invention is achieved by a method for calibration of simulation model of one or more assets in the industrial plant. The term 'assets' refer to any device, system, instrument or machinery manufactured or used in an industry that may be employed for performing an operation. Example of assets include any machinery in a technical system or technical installation/facility such as motors, gears, bearings, shafts, switchgears, rotors, circuit breakers, protection devices, remote terminal units, transformers, reactors, disconnectors, gear-drive, gradient coils, magnet, radio frequency coils etc. Example technical systems include turbines, large drives, Magnetic Resonance Imaging (MRI) scanner, etc. The method comprises receiving a set of requirements to predict one or more parameter values using the simulation model. Herein, the simulation model is generated based on operating conditions and one or more parameters of the one or more assets. The method comprises generating a first trained machine learning model from the simulation model based on the received set of requirements. Herein, the first trained machine learning model represents a steady-state simulation model of the industrial plant valid for the recevied set of requirements.

According to an embodiment, the method of generating the first trained machine learning model based on the received simulation model comprises generating a first dataset comprising plurality of operating conditions and one or more parameters of the industrial plant and corresponding parameter values achieved at steady-state of the simulation model. Notably, the plurality of operating conditions and one or more parameters are input to the simulation model and the corresponding parameter values are output to the simulation model. The method of generating the first trained machine learning model comprises training a first machine learning model based on the generated first dataset until an accuracy of the first machine learning model is above a predefined threshold value. Further, the method comprises generating the first trained machine learning model when the accuracy of the first machine learning model is above the predefined threshold value.

Advantageously, the steady-state simulation model of the industrial plant is a surrogate model and is derived from the actual simulation model based on the set of requirements. Since, the steady-state simulation model is a surrogate model, the time to generate such a model is less as compared to existing methods. Hereinafter, the terms "steady-state simulation model" and "steady-state surrogate model" are used interchangeably. It will be appreciated that the generation of the steady-state surrogate model is a one-time activity.

Further, the method comprises calibrating the first trained machine learning model using the one or more parameters as an input to the first trained machine learning model. The calibration of the first trained machine learning model is performed using a mathematical model. In a preferred embodiment, the mathematical model is a Bayesian model. Advantageously, the calibration of the steady-state simulation model using Bayesian calibration leads to better plant performance.

The method comprises determining a first set of posterior distribution of the one or more parameters of the industrial plant based on the calibrated first trained machine learning model. Herein, the first set of posterior distribution represents a likelihood with which the simulation model predicts the values of the one or more parameters of the industrial plant.

Further, the method comprises sampling the first set of posterior distribution of the one or more parameters. Advantageously, sampling the first set of posterior distribution ensures that the number of simulations are reduced while ensuring that a second trained machine learning model is valid in the operating range of the one or more parameters.

The method comprises generating the second trained machine model based on sampled posterior distribution of the one or more parameters. The second trained machine learning model represents a dynamic state simulation model of the industrial plant. Hereinafter the terms "second trained machine learning model" and "dynamic state simulation model" maybe used interchangeably.

According to an embodiment, the method of generating the second trained machine learning model based on sampled posterior distribution of the one or more parameters comprises determining a second dataset from the sampled posterior distribution of the of the one or more parameters. Further, the method comprises initializing the second machine learning model for each set of parameter combination in the second dataset using a derivative of the parameter values as initial conditions for the second machine learning model. Further, the method comprises training the second machine learning model for each set of the parameter combination in the second dataset until an accuracy of the second machine learning model is above the predefined threshold value. Further, the method comprises generating the second trained machine model when the accuracy of the second machine learning model is above the predefined threshold value.

Advantageously, the second machine learning model is initialized using the derivative of the parameter values instead of the actual parameter values itself. This ensures uniformity in the initial conditions for each parameter combination. Furthermore, this method reduces complexity of the system and mitigates the issue of initial condition variation with change in parameter combination.

According to an embodiment, the first dataset and the second dataset are generated using design of experiments techniques.

The method comprises calibrating the second trained machine learning model using the first set of posterior distribution as input to the second trained machine learning model. The calibration of the second trained machine learning model is performed using the mathematical model. In a preferred embodiment, the mathematical model is a Bayesian model.

The method comprises determining a second set of posterior distribution of the one or more parameters of the industrial plant based on the calibrated second trained machine learning model. The second set of posterior distribution represents a likelihood with which the simulation model predicts the values of the one or more parameters of the industrial plant.

According to an embodiment, the method further comprises generating a digital twin of the industrial plant from the simulation model based on the second set of posterior distribution of the one or more parameters of the industrial plant.

According to an embodiment, the method further comprises validating the second set of posterior distribution of the parameter values with results obtained from the simulation model.

The object of the present invention is also achieved by an apparatus for calibration of a simulation model of an industrial plant. The apparatus comprising one or more processing units and a memory unit communicatively coupled to the one or more processing units. The memory unit comprises a calibration module stored in the form of machine-readable instructions executable by the one or more processing units, wherein the calibration module is configured to perform method steps as mentioned above.

The object of the present invention is also achieved by a system for calibration of a simulation model of an industrial plant. The system comprising a simulation model of one or more assets in an industrial plant, one or more sources configured for providing set of requirements for predicting one or more parameter values using the simulation model, and an apparatus communicatively coupled to the one or more sources. The apparatus is configured for calibration of the simulation model of the industrial plant based on the set of requirements according to the abovementioned method.

The object of the present invention is also achieved by a computer-program product having machine-readable instructions stored therein, which when executed by one or more processing units, cause the processing units to perform the method as abovementioned.

The above-mentioned attributes, features, and advantages of this invention and the manner of achieving them, will become more apparent and understandable (clear) with the following description of embodiments of the invention in conjunction with the corresponding drawings. The illustrated embodiments are intended to illustrate, but not limit the invention.
- FIG 1A: illustrates a block-diagram of a system for calibrating simulation model of one or more assets in an industrial plant, in accordance with an embodiment of the present invention;
- FIG 1B: illustrates a block-diagram of an apparatus for calibrating simulation model of one or more assets in an industrial plant, in accordance with an embodiment of the present invention;
- FIG 2: depicts a flowchart of a method for calibrating simulation model of one or more assets in an industrial plant, in accordance with an embodiment of the present invention;
- FIG 3: depicts a flowchart of a method for generating the first trained machine learning model, in accordance with an embodiment of the present invention;
- FIG 4: depicts flowchart of a method for generating the second trained machine learning model, in accordance with an embodiment of the present invention;
- FIG 5: is a block-diagram of process flow for generating the steady-state simulation model, in accordance with an embodiment of the present invention;
- FIG 6A: is a Graphical User Interface view showing an exemplary training of the first machine learning model, in accordance with an embodiment of the present invention;
- FIG 6B: is a Graphical User Interface view showing training error for the first machine learning model, in accordance with an embodiment of the present invention;
- FIG 7: is a Graphical User Interface view showing pictorial representation of bayesian calibration on the first trained machine learning model, in accordance with an embodiment of the present invention;
- FIG 8: is a Graphical User Interface view showing pictorial representation of sampling of first set of posteriors and generating second dataset, in accordance with an embodiment of the present invention;
- FIG 9: is a Graphical User Interface view showing pictoral representation of initial conditions determination for the second trained machine learning model, in accordance with an embodiment of the present invention;
- FIG 10: is a Graphical User Interface view showing exemplary representation of training the second machine learning model using different parameter combinations, in accordance with an embodiment of the present invention; and
- FIG 11: is a Graphical User Interface view showing pictorial representation of bayesian calibration results of the second trained machine learning model, in accordance with an embodiment of the present invention.

Hereinafter, embodiments for carrying out the present invention are described in detail. The various embodiments are described with reference to the drawings, wherein like reference numerals are used to refer to like elements throughout. In the following description, for purpose of explanation, numerous specific details are set forth in order to provide a thorough understanding of one or more embodiments. It may be evident that such embodiments may be practiced without these specific details.

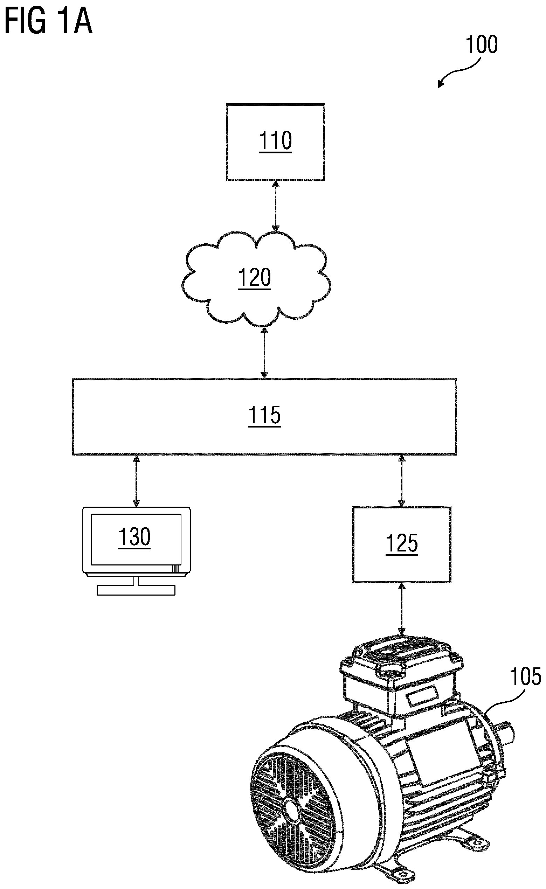

FIG 1A illustrates a block-diagram of a system 100 for calibrating simulation models of one or more assets 105 in an industrial plant, in accordance with an embodiment of the present invention. Example of the industrial plant may be a complex industrial set-up with a plurality of assets 105 such as a power plant, wind farm, power grid, manufacturing facility, process plants and so on. Throughout the present disclosure, the term 'assets' 105 refer to any device, system, instrument or machinery manufactured or used in an industry that may be employed for performing an operation. Example of assets include any machinery in a technical system or technical installation/facility such as motors, gears, bearings, shafts, switchgears, rotors, circuit breakers, protection devices, remote terminal units, transformers, reactors, disconnectors, gear-drive, gradient coils, magnet, radio frequency coils etc. Example technical systems include turbines, large drives, Magnetic Resonance Imaging (MRI) scanner, etc. Example facility/technical installation may be a complex industrial set-up with a plurality of assets such as a power plant, wind farm, power grid, manufacturing facility, process plants and so on., etc.

Throughout the present disclosure, the term 'simulation model' as used herein refers to an analytical model in machine-executable form derived from at least one of a physics-based model, a data-driven model or a hybrid model associated with the asset. The simulation model may be a 1-dimensional(1D) model, a 2-dimensional(2D) model, a 3-dimensional(3D) model or a combination thereof. The simulation model may generate one or more simulation instances based on the set of requirements. The simulation instance may be executed in a simulation environment as one of stochastic simulations, deterministic simulations, dynamic simulations, continuous simulations, discrete simulations, local simulations, distributed simulations, cosimulations or a combination thereof. It must be understood that the simulation models referred to in the present disclosure may include both system-level models and component-level models associated with the asset 105. In an embodiment, the simulation model is generated based on operating conditions and one or more parameters of the one or more assets 105.

The system 100 comprises an apparatus 110 communicatively coupled to an edge device 115. The edge device 115 is connected to the apparatus 110 via a network 120, for example, local area network (LAN), wide area network (WAN), WiFi, etc. The edge device 115 is configured to receive simulation data from a simulation model 125 associated with the one or more assets 105. The simulation model 125 is required to be calibrated for predicting one or more parameter values of the asset 105. In addition, the simulation model 125 is configured to receive sensor data from the one or more assets via a sensing unit (not shown). The sensing unit may include, for example, a temperature sensor, a velocity sensor, an acceleration sensor, a pressure sensor, and a force sensor. The sensor data corresponds to an output of the sensing unit. For example, the output from the sensing unit may be in the form of temperature data, velocity data, acceleration data or pressure data. In an embodiment, the sensor data are obtained through data acquisition interfaces. In addition, the simulation model 125 is also configured to receive parameter values of the one or more assets 105. For example, the asset 105 may be a gas turbine and the measurements recevied from the sensing units are pressure of water, enthapy of water, mass flow rate of high pressure evaporator and so on.

The one or more parameters may be stored in a memory of the edge device 115 or may be input to the edge device 115 by an operator. For example, the edge device 115 may be communicatively coupled to a client device 130. Non-limiting examples of client devices 130 include, personal computers, workstations, personal digital assistants, human machine interfaces. The client device 130 may enable the user to input one or more parameter combinations or a set of requirements for the simulation model 125 through a web-based interface. Upon receiving the one or more parameters from the user, the edge device 115 transmits a request for calibrating the simulation model 125 to the apparatus 110.

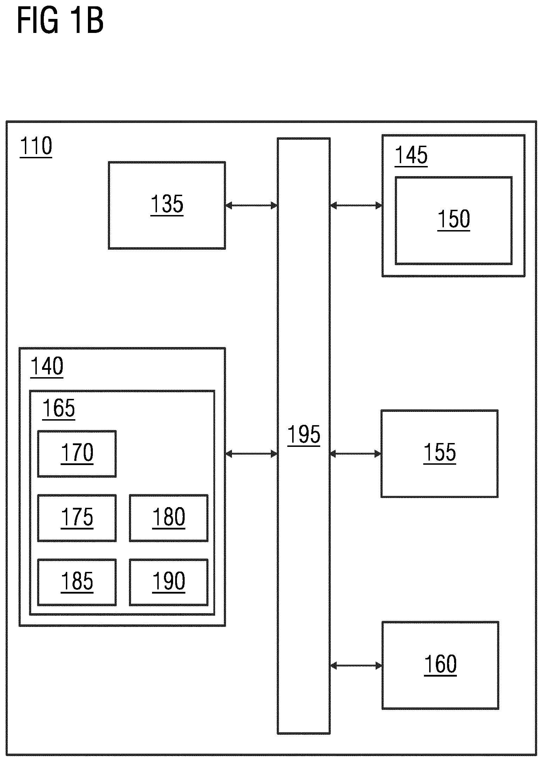

In the present embodiment, the apparatus 110 is deployed in a cloud computing environment. As used herein, "cloud computing environment" refers to a processing environment comprising configurable computing physical and logical resources, for example, networks, servers, storage, applications, services, etc., and data distributed over the network 120, for example, the internet. The cloud computing environment provides ondemand network access to a shared pool of the configurable computing physical and logical resources. The apparatus 110 may include a calibration module (shown in FIG 1B) that calibrated the simulation model 125 of one or more assets 105 in the industrial plant. Additionally, the apparatus 110 may include a network interface for communicating with the one or more edge devices 115 via the network 120.

In another embodiment, the apparatus 110 can be an edge computing device. As used herein "edge computing" refers to computing environment that is capable of being performed on an edge device (e.g., connected to sensing units in an industrial setup and one end and to a remote server(s) such as for computing server(s) or cloud computing server(s) on other end), which may be a compact computing device that has a small form factor and resource constraints in terms of computing power. A network of the edge computing devices can also be used to implement the apparatus. Such a network of edge computing devices is referred to as a fog network.

The apparatus 110 comprises a processing unit 135, a memory unit 140, a storage unit 145, an input unit 155, an output unit 160 and a standard interface or bus 195, as shown in FIG 1B. The apparatus 110 can be a computer, a workstation, a virtual machine running on host hardware, a microcontroller, or an integrated circuit. As an alternative, the apparatus 110 can be a real or a virtual group of computers (the technical term for a real group of computers is "cluster", the technical term for a virtual group of computers is "cloud").

The term 'processing unit' 135, as used herein, means any type of computational circuit, such as, but not limited to, a microprocessor, microcontroller, complex instruction set computing microprocessor, reduced instruction set computing microprocessor, very long instruction word microprocessor, explicitly parallel instruction computing microprocessor, graphics processor, digital signal processor, or any other type of processing circuit. The processing unit 135 may also include embedded controllers, such as generic or programmable logic devices or arrays, application specific integrated circuits, single-chip computers, and the like. In general, a processing unit 135 may comprise hardware elements and software elements. The processing unit 135 can be configured for multi-threading, i.e. the processing unit 135 may host different calculation processes at the same time, executing the either in parallel or switching between active and passive calculation processes.

The memory unit 140 may be volatile memory and non-volatile memory. The memory unit 140 may be coupled for communication with the processing unit 135. The processing unit 135 may execute instructions and/or code stored in the memory unit 140. A variety of computer-readable storage media may be stored in and accessed from the memory unit 140. The memory unit 140 may include any suitable elements for storing data and machine-readable instructions, such as read only memory, random access memory, erasable programmable read only memory, electrically erasable programmable read only memory, a hard drive, a removable media drive for handling compact disks, digital video disks, diskettes, magnetic tape cartridges, memory cards, and the like.

The memory unit 140 comprises the calibration module 165 in the form of machine-readable instructions on any of the above-mentioned storage media and may be in communication to and executed by the processing unit 135.

The calibration module 165 comprises a steady-state simulation module 170, a steady-state calibration module 175, a sampling module 180, a dynamic state simulation module 185 and a dynamic state calibration module 190.

The steady-state simulation module 170 is configured for generating the first trained machine learning model of the one or more assets 105 based on a request from the user. The request comprises the set of requirements recevied from the user. The steady-state simulation module 170 is configured for generating the steady-state surrogate model from the simulation model 125 valid for the recevied set of requirements.

The steady-state calibration module 175 is configured for calibrating the first trained machine learning model or steady-state simulation model using the one or more parameters as an input to the first trained machine learning model. The steady-state calibration module 175 is configured for performing the calibration of the steady-state simulation model using Bayesian calibration. The steady-state calibration module 175 is further configured for determining a first set of posterior distribution of the one or more parameters of the industrial plant based on the calibrated first trained machine learning model.

The sampling module 180 is configured for sampling the first set of posterior distribution of the one or more parameters. The dynamic state simulation module 185 is configured for generating a second trained machine model based on sampled posterior distribution of the one or more parameters. The dynamic state calibration module 190 is configured for calibrating the second trained machine learning model using the first set of posterior distribution as input to the second trained machine learning model. The dynamic state calibration module 190 is configured for calibrating the second trained machine learning model using Bayesian calibration techniques. Furthermore, the dynamic state calibration module 190 is configured for determining a second set of posterior distribution of the one or more parameters of the industrial plant based on the calibrated second trained machine learning model.

The storage unit 145 comprises a non-volatile memory which stores one or more parameters used for generating steady-state calibration model. The storage unit 145 includes a database 150 that comprises default parameter values for the one or more assets 105. The bus 195 acts as interconnect between the processing unit 135, the memory unit 140, the storage unit 145, the input unit 155 and the output unit 160. The input unit 155 enables the user to input parameters or raise request for the simulation model 125. The output unit 160 is configured for present the measurements of the parameter values as requested.

Those of ordinary skilled in the art will appreciate that the hardware depicted in FIG 1A and 1B may vary for different implementations. For example, other peripheral devices such as an optical disk drive and the like, Local Area Network (LAN)/ Wide Area Network (WAN)/ Wireless (e.g., Wi-Fi) adapter, graphics adapter, disk controller, input/output (I/O) adapter, network connectivity devices also may be used in addition or in place of the hardware depicted. The depicted example is provided for the purpose of explanation only and is not meant to imply architectural limitations with respect to the present disclosure.

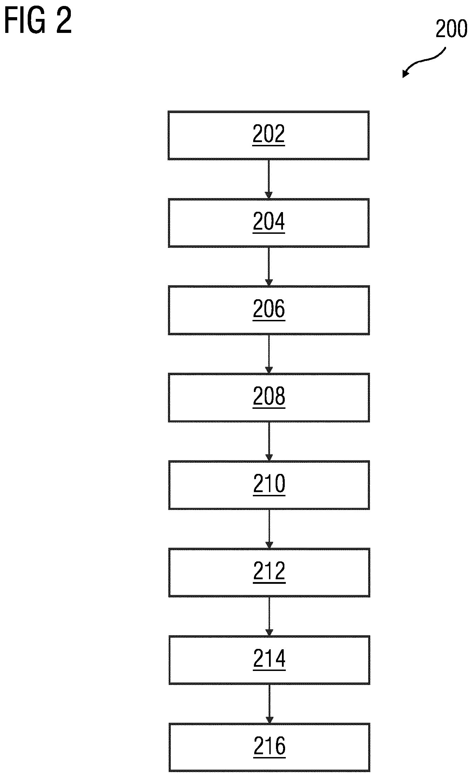

FIG 2 depicts a flowchart of a method 200 for calibrating simulation model 125 of one or more assets 105 in an industrial plant, in accordance with an embodiment of the present invention. At step 202, a set of requirements to predict one or more parameter values using the simulation model 125 is received. The set of requirements comprises request and problem definition for predicting the one or more parameter values using the simulation model 125. The problem definition maybe to determine the speed of the asset 105 such as a hydraulic pump in the next two hours given a particular load. Such set of requirements are received using a web-based interface through the client device 130. Throughout the present disclosure, the term 'parameter values' refers to the prediction output of the simulation model 125. The one or more parameter values are associated with a state of the asset 105 after a defined period of time based on the received set of requirements. In an example, the one or more parameter values, in case of a turbine, may include temperature of exhaust gas, mass flow rate of exhaust gas, mass flow rate of water in high pressure evaporator and the like.

Throughout the present disclosure, the term 'simulation model' as used herein refers to an analytical model in machine-executable form derived from at least one of a physics-based model, a data-driven model or a hybrid model associated with the asset 105. The simulation model may be a 1-dimensional(1D) model, a 2-dimensional(2D) model, a 3-dimensional(3D) model or a combination thereof. The simulation model may generate one or more simulation instances based on the set of requirements. The simulation instance may be executed in a simulation environment as one of stochastic simulations, deterministic simulations, dynamic simulations, continuous simulations, discrete simulations, local simulations, distributed simulations, cosimulations or a combination thereof. It must be understood that the simulation models referred to in the present disclosure may include both system-level models and component-level models associated with the asset 105. In an embodiment, the simulation model 125 is generated based on operating conditions and one or more parameters of the one or more asset 105. Throughout the present disclosure the term 'operating conditions' may refer to one or more values of the parameters of the asset 105 when in operation. Accordingly, the operating conditions is a measure of the operating parameters associated with the operation of the asset 105. For example, the operating conditions include values of vibration, temperature, current, magnetic flux, velocity, power of a rotor in a turbine and the like.

In an exemplary embodiment, the simulation model 125 is a large scale model designed to predict the parameter values of plurality of assets in the industrial plant. The simulation model 125 maybe a pre-existing model for a particular industrial plant and may be integrated in the present invention for calibration thereof. It will be appreciated that the simulation model 125 as described herein is only for the purpose of understanding the context of the invention. In an example, any third party simulation model 125 may be integrated with the apparatus 110 to calibrate the simulation model 125 by generating a surrogate model as explained in step 204 - 212.

At step 204, a first trained machine learning model is generated from the simulation model 125 based on the received set of requirements. The first trained machine learning model represents a steady-state simulation model of the industrial plant valid for the recevied set of requirements. It should be understood that the steady-state simulation model is a surrogate model based on the simulation model 125. The term "first machine learning model" as used herein refers to a prediction model given a set of training dataset. In general, each individual sample of the training data is a pair containing a dataset (e.g., operating of the asset 105 and corresponding parameter values of the asset 105) and a desired output value or dataset (e.g., parameter values of the asset 105).

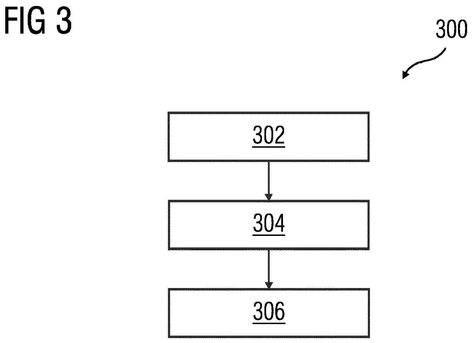

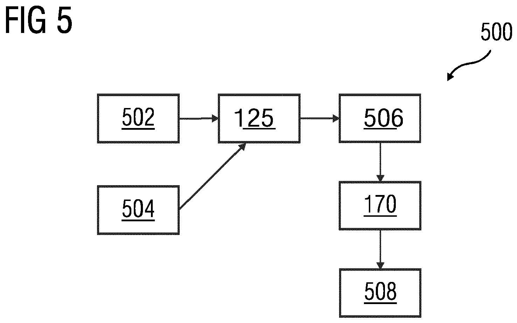

The first machine learning model analyzes the training data and produces a predictor function. The predictor function, once derived through training, is capable of reasonably predicting or estimating the correct output value or dataset. In particular, the first trained machine learning model receives set of requirements from the user such as gas turbine load, heat transfer coefficient, pressure drop coefficient, junction coefficient and so forth and the output of the steady-state simulation model maybe be the parameter values of asset 105 such as the temperature of exhaust gas, mass flow rate of water, enthalpy of water in a gas turbine and so forth. Exemplary machine learning models may include artificial intelligence model such as deep neural network, convolutional neural network, and the like. A graphical illustration of the generation input and output of the steady-state simulation model is shown in FIG 5. FIG 5 is a block-diagram 500 of process flow for generating the steady-state simulation model, in accordance with an embodiment of the present invention. As shown, the simulation model 125 receives the set of requirements 502 and 504. Herein, 502 is independent variable such as gas turbine load and the 504 are parameters to be calibrated such as heat transfer coefficient, pressure drop coefficient, junction coefficient and so forth. The simulation model 125 upon reaching the steady state may output the requested parameter values 506. However, as explained earlier, this large scale complex model and therefore the output from the simulation model 125 may require several hours. For this purpose, the steady-state simulation module 170 is configured to generate the steady-state model valid for the received set of requirements in an efficient manner. Furthermore, the parameter values 508 maybe a recevied as an output from the steady state simulation model 170. The method of generation of the first trained machine learning model is explained in further detail in FIG. 3.

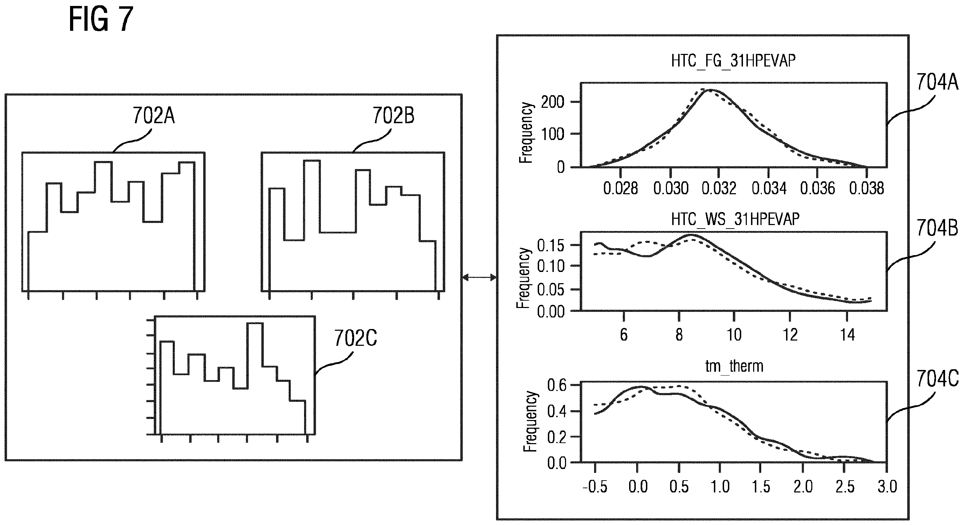

At step 206, the first trained machine learning model is calibrated using the one or more parameters as an input to the first trained machine learning model. When the steady-state surrogate model is generated, the one or more parameters that are to be calibrated such as mass flow rate, temperature, enthalpy, known coefficients are input to the steady-state surrogate model and then calibration of the steady-state surrogate model is performed. The calibration of the first trained machine learning model or steady-state surrogate model is performed using a mathematical model. In an embodiment, the mathematical model is a Bayesian model. As known in the art, Bayesian calibration allows the formulation of prior (historical knowledge of parameter values), generation of appropriate likelihood functions (error functions based on the discrepancy function between plant simulation and observations that may be uncertain in space) and further using the Bayes theorem, to estimate the posteriors of parameter values. The posteriors of the parameter values represent the likelihood with which the plant simulation model predicts the observations. The calibration of the first trained machine learning model is explained further in FIG 7. FIG 7 is a Graphical User Interface view 700 showing pictorial representation of bayesian calibration on the first trained machine learning model, in accordance with an embodiment of the present invention. The plots 702 represent the priors or the unknows parameter values that are to be calibrated. The priors 702 are input to the steady-state calibration module 175 to generate posteriors 704. The posteriors 704 are represented in the form of frequency plots obtained for corresponding priors 702.

At step 208, a first set of posterior distribution of the one or more parameters of the industrial plant is determined based on the calibrated first trained machine learning model. The first set of posterior distribution represents a likelihood with which the simulation model predicts the values of the one or more parameters of the industrial plant. As shown in FIG 7, the posteriors 704 are the first set of posterior distribution of the one or more parameters of the industrial plant. According to an embodiment, the first set of posteriors maybe validated with the results obtained from the simulation model 125.

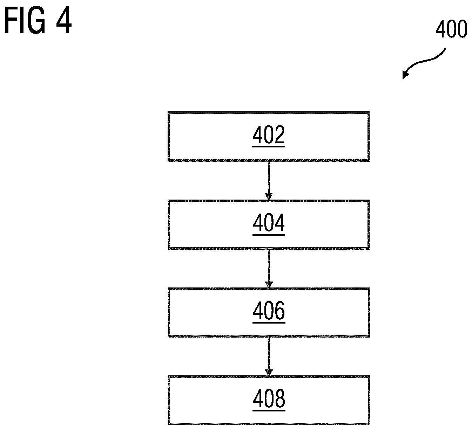

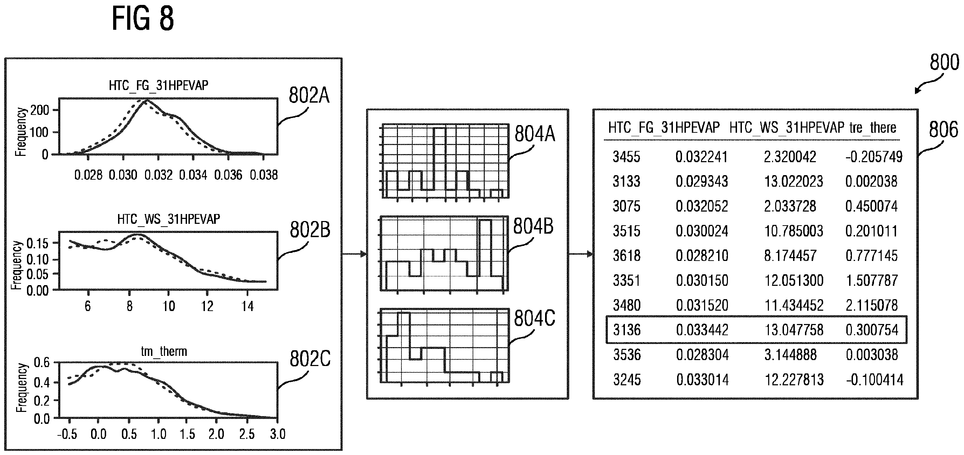

At step 210, the first set of posterior distribution of the one or more parameters are sampled. Advantageously, sampling the first set of posterior distribution ensures that the number of simulations are reduced while ensuring that the second trained machine learning model is valid in operating range of the one or more parameters. The sampling of the first set of posterior distribution is illustrated in FIG 8 and explained in conjunction with FIG 4.

At step 212, a second trained machine model is generated based on sampled posterior distribution of the one or more parameters. The second trained machine learning model represents a dynamic state simulation model of the industrial plant. It should be understood that the second trained machine learning model is a surrogate model based on the sampled posterior distribution of the one or more parameters. The term "second machine learning model" as used herein refers to a prediction model given a set of training dataset. In general, each individual sample of the training data is a pair containing a dataset (e.g., first set of posterior distribution and corresponding parameter values of the asset 105) and a desired output value or dataset (e.g., parameter values of the asset 105). The second machine learning model analyzes the training data and produces a predictor function. The predictor function, once derived through training, is capable of reasonably predicting or estimating the correct output value. Exemplary machine learning models may include artificial intelligence model such as deep neural network, convolutional neural network, and the like. The method of generation of the second trained machine model based on sampled posterior distribution of the one or more parameters is explained in further detail in FIG 4.

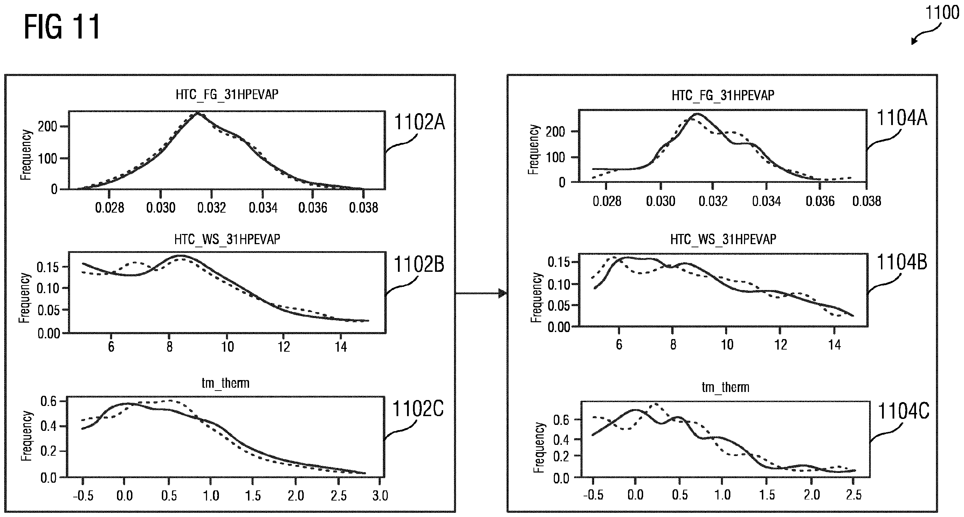

At step 214, the second trained machine learning model is calibrated using the first set of posterior distribution as input to the second trained machine learning model. The calibration of the second trained machine learning model is performed using the mathematical model. When the dynamic state surrogate model is generated, the first set of posteriors as obtained from the steady-state surrogate model are utilized as priors to the dynamic state surrogate model. In an embodiment, the mathematical model is a Bayesian model. As known in the art, Bayesian calibration allows the formulation of prior (historical knowledge of parameter values), generation of appropriate likelihood functions (error functions based on the discrepancy function between plant simulation and observations that may be uncertain in space) and further using the Bayes theorem, to estimate the posteriors of parameter values. The posteriors of the parameter values represent the likelihood with which the plant simulation model predicts the observations. FIG 11 is a Graphical User Interface view 1100 showing pictorial representation of bayesian calibration results of the second trained machine learning model, in accordance with an embodiment of the present invention. As shown, the plots 1102A, 1102B, 1102C represent the first set of posterior distributions that are input to the dynamic state calibration module 190 to determine update posteriors i.e. the second set of posterior distributions. The corresponding second set of posterior distributions are represented in plots 1104A, 1104B and 1104C.

At step 216, determining the second set of posterior distribution of the one or more parameters of the industrial plant based on the calibrated second trained machine learning model. The second set of posterior distribution represents a likelihood with which the simulation model predicts the values of the one or more parameters of the industrial plant. The second set of posterior distribution thus obtained are refined set of parameter distributions which are influenced by both steady state calibration and dynamic state calibration.

FIG. 3 depicts a flowchart of a method 300 for generating the first trained machine learning model, in accordance with an embodiment of the present invention. At step 302, a first dataset is generated. The first dataset comprises a plurality of operating conditions and one or more parameters of the industrial plant and corresponding parameter values achieved at steady-state of the simulation model 125. Herein, the plurality of operating conditions and one or more parameters are input to the simulation model 125 and the corresponding parameter values are output to the simulation model 125. In an embodiment, the first dataset may be generated using design of experiments (DOE) technique. The design of experiments (DOE) is a systematic method to determine the relationship between factors affecting a process and the output of that process. Moreover, design of experiments (DOE) technique is used to find cause-and-effect relationships between input and output. Advantageously, such information is needed to manage process inputs in order to optimize the output. The DOE technique is well known in the state of the art. In an exemplary embodiment, the DOE technique used herein is to utilize an optimal Latin hyper cube. The Latin hyper cube is designed for the operating variables and the one or more parameters of the simulation model 125. It will be appreciated that other space filling design techniques may also be used to generate the first dataset without limiting the scope of the invention.

An example of the first dataset for a gas turbine plant is shown below in Table 1. Table 1 represents the input parameters and output parameters of the simulation model 125. As maybe seen in the Table 1, the input parameters are HTC_FG_31HPVAP i.e. the heat transfer coefficient of fuel gas in high pressure evaporator, HTC_WS_31HPEVAP i.e. heat transfer coefficient of water stream in high pressure evaporator, GT_load i.e. gas turbine load, Data_mHPWATEREvin/Y i.e. mass flow rate of water in high pressure evaporator, Data_PHPWATEREvout/Y i.e. pressure of water in high pressure evaporator, Data_hHPWATEREvin/Y i.e. enthalpy of water in high pressure evaporator. The output parameters are Data_TEGout/Y i.e. temperature of exhaust gas, Data_hHPWATEREvout/Y i.e. enthalpy of water in high pressure evaporator, Data_mEGout/Y i.e. mass flow rate of exhaust gas, Data_mHPWATEREvout/Y i.e. mass flow rate of exhaust gas. Each of the row in Table 1 can be referred to as an experiment. Therefore, Table 1 shows examples of experiments conducted on the simulation model 125 until the simulation model 125 reaches a steady state. It should be understood that since generation of the first dataset is a one time activity.

**Table 1**

| **Input to the simulation model** | | | | | | **Output from the simulation model** | | | |
|---|---|---|---|---|---|---|---|---|---|
| **HTC_F G_31H PVAP** | **HTC_W S_31H PEVAP** | **GT_ loa d** | **Data _mHP WA-TERE vin/ Y** | **Data _PHP WA-TERE vout /Y** | **Data _hHP WA-TERE vin/ Y** | **Data _TEG out/ Y** | **Data _hHP WA-TERE vout /Y** | **Data _mEG out/ Y** | **Data _mHP WA-TERE vout /Y** |
| 0.021 458 | 5.367893 | 92.421 405 | 16.9 0937 1 | 71. 9 3868 2 | 1023 .745 819 | 272. 2434 52 | 3375 .041 860 | 125. 8285 79 | 16.9 3577 5 |
| 0.047 157 | 9.214047 | 44.501 672 | 17.2 6087 0 | 62.4 2447 2 | 914. 7157 19 | 225. 3513 19 | 2945 .078 523 | 83.8 7613 6 | 17.2 5784 4 |
| 0.016 910 | 5.568562 | 100.00 0000 | 17.2 9765 9 | 68.0 6276 8 | 952. 1739 13 | 271. 8031 22 | 3386 .151 130 | 136. 1510 50 | 17.2 5190 6 |
| 0.025 211 | 7.976 589 | 54. 615 385 | 16.0 4682 3 | 73.6 5223 2 | 1013 .043 478 | 254. 8798 98 | 3206 .072 162 | 91.3 6417 1 | 16.0 4637 2 |
| 0.037 378 | 14.26 4214 | 85. 197 324 | 17.1 8729 1 | 80.0 3973 4 | 1070 .568 562 | 263. 2476 56 | 3389 .958 612 | 117. 4602 98 | 17.1 8826 5 |

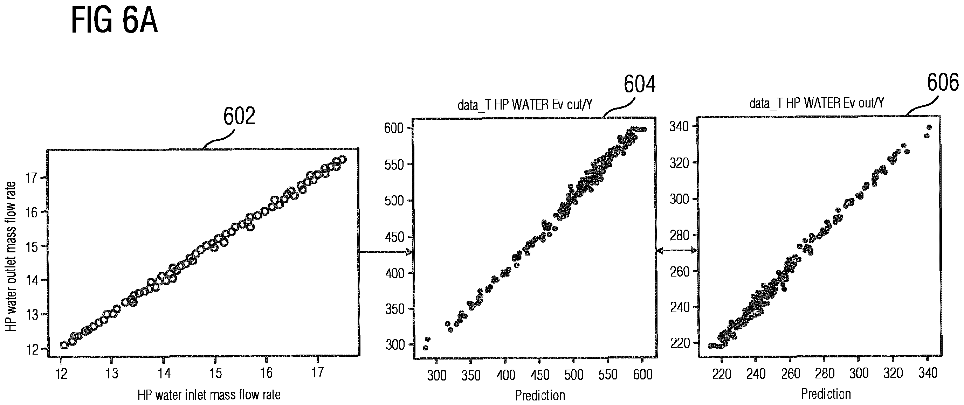

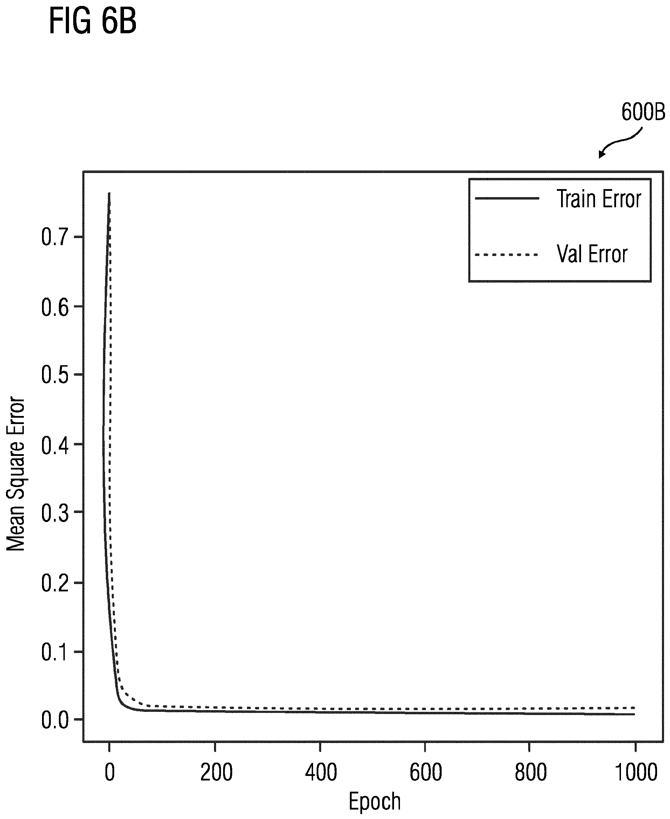

At step 304, a first machine learning model is trained based on the generated first dataset until an accuracy of the first machine learning model is above a predefined threshold value. For example, the predefined threshold value maybe set by an operator to 93%. The first machine learning is trained on the different experiments including the input parameter and output parameter combination as shown in Table 1. The training of the first machine learning model is explained in greater detail in FIG 6A and FIG 6B. FIG 6A is a Graphical User Interface view 600A showing an exemplary training of the first machine learning model, in accordance with an embodiment of the present invention. As shown, graph 602 represents a linear relationship between the outlet mass flow rate of water and inlet mass flow rate of water. The data is passed through the steady-state simulation module 170 to train the first machine learning model and obtain the steady state parameters as shown in plot 604 and 606. Furthermore, FIG 6B is a Graphical User Interface view 600B showing training error for the first machine learning model, in accordance with an embodiment of the present invention. As shown the training error plot 600B is a plot between epoch values and mean square error values of the first dataset. As may be seen the training error line plot and the validation error line plot almost coincide representing high accuracy of the trained first machine learning model. At step 306, the first trained machine learning model is generated when the accuracy of the first machine learning model is above the predefined threshold value. In an example, the first trained machine learning model is generated when the accuracy of the training is above 93%.

FIG 4 depicts flowchart of a method 400 for generating the second trained machine learning model, in accordance with an embodiment of the present invention. At step 402, a second dataset is determined from the sampled posterior distribution of the of the one or more parameters. The second dataset is generated by sampling the first set of posterior distribution and determining a median from the sampled set. Advantageously, the second dataset ensures reduced number of simulations to be executed for generating the second trained machine learning model. An example of generation of second dataset is depicted in FIG 8. FIG 8 is a Graphical User Interface view 800 showing pictorial representation of sampling of first set of posteriors and generating second dataset, in accordance with an embodiment of the present invention. The first set of posteriors for different parameters as depicted in plots 802A, 802B, and 802C are sampled to obtain median values as seen in plots 804A, 804B and 804C respectively. Further, table 806 represents how a particular value is chosen to determine the second dataset.

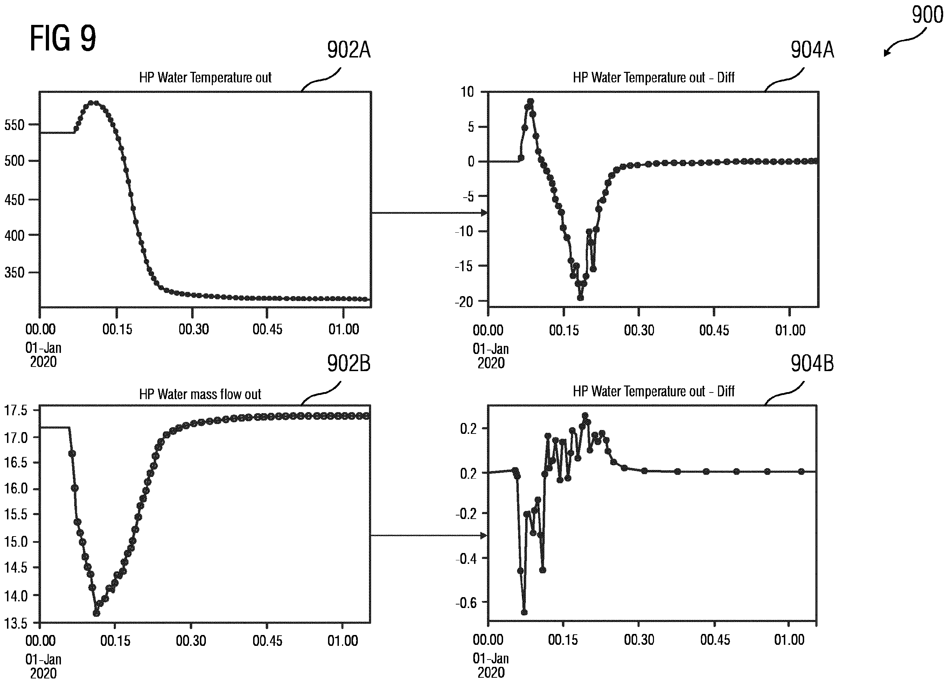

At step 404, the second machine learning model is initialized for each set of parameter combination in the second dataset using a derivative of the parameter values as initial conditions for the second machine learning model. It should be understood that dynamic state surrogate model requires a set of initial conditions to start forward time marching. Since the initial conditions are dependent upon the one or more parameters, as the steady state value at each parameter combination will yield different initial conditions. Therefore, it is not possible to initialize with uniform initial conditions. In order to mitigate this, the second trained machine learning model is trained on the derivate of the parameter values as initial conditions instead of actual parameter values. This ensures uniformity in the initial conditions for each parameter combination. Furthermore, this method reduces complexity of the system and mitigates the issue of initial condition variation with change in parameter combination. FIG 9 is a Graphical User Interface view 900 showing pictoral representation of initial conditions determination for the second trained machine learning model, in accordance with an embodiment of the present invention. As may be seen in plots 902A and 902B, the initial parameter values are 54.80 and 17.20 for water temperature of high pressure evaporator and mass flow rate of water of high pressure evaporator respectively. After taking diifernetial of the shown parameter values, the plots 904A and 904B represent that initial conditions start at 0 for each plots of water temperature of high pressure evaporator and mass flow rate of water of high pressure evaporator.

At step 406, the second machine learning model is trained for each set of the parameter combination in the second dataset until an accuracy of the second machine learning model is above the predefined threshold value. The dynamic state surrogate model is trained until a desirable accuracy is achieved. The predefined threshold value may be set by the operator based on criticality of operation of assets 105 in the industrial asset. In an example, the predefined threshold value may be 95%. At step 408, the second trained machine model is generated when the accuracy of the second machine learning model is above the predefined threshold value.

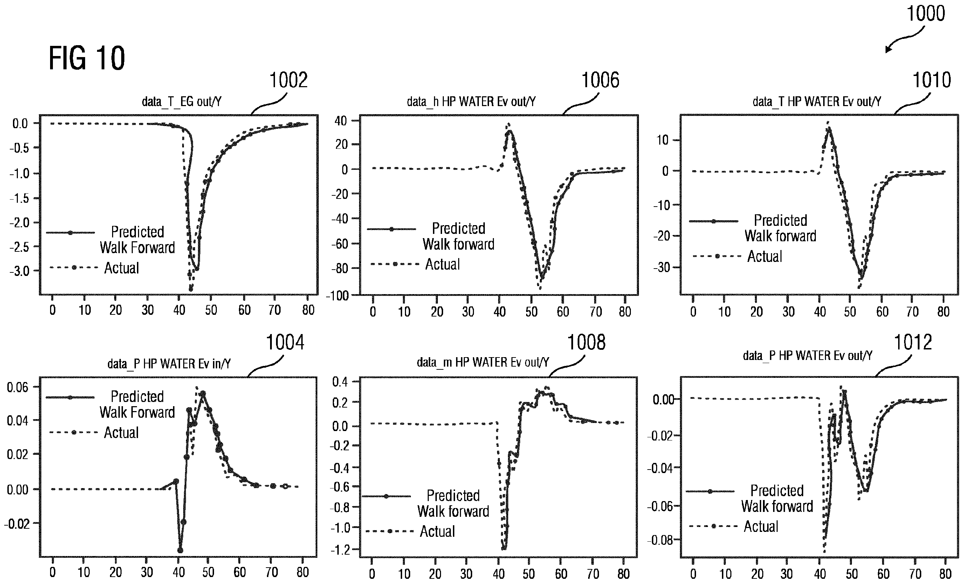

According to an embodiment, the method comprises validating the second set of posterior distribution of the parameter values with results obtained from the simulation model. Herein, the results from the dynamic state surrogate model are validated against the results obtained from the simulation model 125. It should be understood that the validation of the results is only a one-time activity. Such a method helps in validating the reliability of the calibrated parameters. Such training results are described in FIG 10. FIG 10 is a Graphical User Interface view 1000 showing exemplary representation of validating the second machine learning model using different parameter combinations, in accordance with an embodiment of the present invention. Illustrated are different plots for representing a comparison between the predicted parameter value as obtained from the dynamic state surrogate model and the actual parameter values as obtained from the simulation model 125. Herein, the plot 1002 represents temperature of exhaust fan with respect to time. The dotted line represents actual measurements of temperature from the insdutrail plant and the solid lines represent the prediction results of temperature after bayesian calibration. The plot 1004 represents pressure of water of at the inlet of high pressure evaporator with respect to time. The dotted line represents actual measurements of pressure from the insdutrial plant and the solid lines represent the prediction results of pressure after bayesian calibration. The plot 1006 represents temperature of water at the outlet of high pressure evaporator with respect to time. The dotted line represents actual measurements of temperature at outlet from the industrial plant and the solid lines represent the prediction results of temeprature at outlet after bayesian calibration. The plot 1008 represents mass flow rate of water at outlet of high pressure evaporator with respect to time. The dotted line represents actual measurements of mass flow rate at outlet from the insdutrial plant and the solid lines represent the prediction results of mass flow rate at outlet after bayesian calibration. The plot 1010 represents temperature of high pressure evaporator at outlet with respect to time. The dotted line represents actual measurements of temperature at outlet from the insdutrial plant and the solid lines represent the prediction results of temperature at outlet after bayesian calibration. The plot 1012 represents pressure of high pressure evaporator at outlet with respect to time. The dotted line represents actual measurements of pressure at outlet from the insdutrial plant and the solid lines represent the prediction results of pressure at outlet after bayesian calibration.

According to an embodiment, the method further comprises generating a digital twin of the industrial plant from the simulation model based on the second set of posterior distribution of the one or more parameters of the industrial plant. The term 'simulation model' as used herein refers to a dynamic virtual replica based on one or more of physics-based models, Computer-Aided Design (CAD) models, Computer-Aided Engineering (CAE) models, one-dimensional (1D) models, two-dimensional (2D) models, three-dimensional (3D) models, finite-element (FE) models, descriptive models, metamodels, stochastic models, parametric models, reduced-order models, statistical models, heuristic models, prediction models, ageing models, machine learning models, Artificial Intelligence models, deep learning models, system models, knowledge graphs and so on. The digital twin thus generated based on the set of posteriors of the dynamic state surrogate model maitains high accuracy.

The present invention facilitates the generation of a digital twin by improving the effectiveness of calibration of the simulation models using Bayesian calibration. The present invention further reduces the downtime to calibrate the simulation model by generating surrogate models. Advantageously, the generation of the steady-state surrogate model and the dynamic state surrogate model ensures that time to generate the posteriors for calibration is reduced significantly in order enable real-time optimization of the industrial plant. For example, time for simulation in the steady state surrogate model approximately 0.1 seconds and the time for executing simulations in the simulation model 125 is greater than 2 hours. The present invention is also cost-efficient and resource efficient as the steady-state surrogate model generation is one-time activity and the surrogate model is valid for future activity as well. Furthermore, such a method helps in early diagnosis and prognosis of asset failure in turn mitigating the downtime and enhancing the overall reliability of the digital twin.

The present invention is not limited to a particular computer system platform, processing unit, operating system, or network. One or more aspects of the present invention may be distributed among one or more computer systems, for example, servers configured to provide one or more services to one or more client computers, or to perform a complete task in a distributed system. For example, one or more aspects of the present invention may be performed on a client-server system that comprises components distributed among one or more server systems that perform multiple functions according to various embodiments. These components comprise, for example, executable, intermediate, or interpreted code, which communicate over a network using a communication protocol. The present invention is not limited to be executable on any particular system or group of system, and is not limited to any particular distributed architecture, network, or communication protocol.

While the invention has been illustrated and described in detail with the help of a preferred embodiment, the invention is not limited to the disclosed examples. Other variations can be deducted by those skilled in the art without leaving the scope of protection of the claimed invention.

### List of reference numbers:

- 100: system for calibration of one or more assets
- 105: asset
- 110: apparatus
- 115: edge device
- 120: network
- 125: simulation model
- 130: client device/ user device
- 135: processing unit
- 140: memory unit
- 145: storage unit
- 150: database
- 155: input unit
- 160: output unit
- 165: calibration module
- 170: steady-state simulation module
- 175: steady-state calibration module
- 180: sampling module
- 185: dynamic state simulation module
- 190: dynamic state calibration module
- 195: bus
- 200: method for calibrating simulation model of one or more assets in an industrial plant
- 300: method for generating the first trained machine learning model
- 400: method for generating the second trained machine learning model
- 500: block-diagram of process flow for generating the steady-state simulation model
- 600A: Graphical User Interface view showing an exemplary training of the first machine learning model
- 600B: Graphical User Interface view showing training error for the first machine learning model
- 700: Graphical User Interface view showing pictorial representation of bayesian calibration on the first trained machine learning model
- 800: Graphical User Interface view showing pictorial representation of sampling of first set of posteriors and generating second dataset
- 900: Graphical User Interface view showing pictoral representation of initial conditions determination for the second trained machine learning model
- 1000: Graphical User Interface view showing exemplary representation of training the second machine learning model using different parameter combinations
- 1100: Graphical User Interface view showing pictorial representation of bayesian calibration results of the second trained machine learning model

## Claims

1. A method (400) for calibration of a simulation model (125) of one or more assets (105) in an industrial plant, the method comprising:
receiving, by a processing unit (135), a set of requirements to predict one or more parameter values (502, 504) using the simulation model (125), wherein the simulation model is generated based on operating conditions and one or more parameters of the one or more assets (125);
generating a first trained machine learning model from the simulation model (125) based on the received set of requirements, wherein the first trained machine learning model represents a steady-state simulation model of the industrial plant valid for the recevied set of requirements;
calibrating the first trained machine learning model using the one or more parameters (502, 504) as an input to the first trained machine learning model, wherein the calibration of the first trained machine learning model is performed using a mathematical model;
determining a first set of posterior distribution of the one or more parameters of the industrial plant based on the calibrated first trained machine learning model, wherein the first set of posterior distribution represents a likelihood with which the simulation model predicts the values of the one or more parameters of the industrial plant;
sampling the first set of posterior distribution of the one or more parameters;
generating a second trained machine model based on sampled posterior distribution of the one or more parameters, wherein the second trained machine learning model represents a dynamic state model of the simulation model of the industrial plant;
calibrating the second trained machine learning model using the first set of posterior distribution as input to the second trained machine learning model, wherein the calibration of the second trained machine learning model is performed using the mathematical model; and
determining a second set of posterior distribution of the one or more parameters of the industrial plant based on the calibrated second trained machine learning model, wherein the second set of posterior distribution represents a likelihood with which the simulation model predicts the values of the one or more parameters of the industrial plant.

2. The method according to claim 1, further comprising generating a digital twin of the industrial plant from the simulation model based on the second set of posterior distribution of the one or more parameters of the industrial plant.

3. The method according to claim 1, wherein generating the first trained machine learning model based on the received simulation model comprises:
generating, by the processing unit (135), a first dataset comprising plurality of operating conditions and one or more parameter of the industrial plant and corresponding parameter values achieved at steady-state of the simulation model, wherein the plurality of operating conditions and one or more parameters (502, 504) are input to the simulation model (125) and the corresponding parameter values are output to the simulation model;
training a first machine learning model based on the generated first dataset until an accuracy of the first machine learning model is above a predefined threshold value; and
generating the first trained machine learning model when the accuracy of the first machine learning model is above the predefined threshold value.

4. The method according to any of the claims 1 to 3, wherein generating the second trained machine model based on sampled posterior distribution of the one or more parameters comprises:
determining, by the processing unit (135), a second dataset from the sampled posterior distribution of the one or more parameters;
initializing the second machine learning model for each set of parameter combination in the second dataset using a derivative of the parameter values as initial conditions for the second machine learning model;
training the second machine learning model for each set of the parameter combination in the second dataset until an accuracy of the second machine learning model is above the predefined threshold value; and
generating the second trained machine model when the accuracy of the second machine learning model is above the predefined threshold value.

5. The method according to any of the preceding claims, wherein the mathematical model is a Bayesian model.

6. The method according to any claims further comprising validating the second set of posterior distribution of the parameter values with results obtained from the simulation model (125) .

7. The method according to any of the preceding claims wherein the first dataset and the second dataset are generated using design of experiments techniques.

8. An apparatus (110) for calibration of a simulation model (125) of an industrial plant, the apparatus comprising:
one or more processing units (135); and
a memory unit (140) communicatively coupled to the one or more processing units (135), wherein the memory unit (140) comprises a calibration module (165) stored in the form of machine-readable instructions executable by the one or more processing units (135), wherein the calibration module is configured to perform method steps according to any of the claims 1 to 7.

9. A system (100) for calibration of a simulation model (125) of an industrial plant, the system comprising:
a simulation model (125) of one or more assets (105) in an industrial plant;
one or more devices (130) configured for providing set of requirements for predicting one or more parameter values using the simulation model (125); and
an apparatus (110) according to claim 8, communicatively coupled to the one or more devices (130), wherein the apparatus is configured for calibration of the simulation model (125) of the industrial plant based on the set of requirements, according to any of the method claims 1 to 7.

10. A computer-program product having machine-readable instructions stored therein, which when executed by one or more processing units (135), cause the processing units to perform a method according to any of the claims 1 to 7.
